# FASCICULE DE BREVET EUROPEEN

(11) **EP 3 360 234 B1**
(45) Date de publication et mention de la délivrance du brevet: **07.04.2021**
(21) Numéro de dépôt: 16788169.7
(22) Date de dépôt: 04.10.2016
(51) Int. Cl.: H02K 1/30, H02K 15/03, H02K 1/27, H02K 5/08, H02K 7/18

(54) **ROTOR PORTE-AIMANTS A CHÂSSIS MONOBLOC POUR MOTEUR-ROUE**
MAGNETLAGERROTOR MIT EINEM EINTEILIGEN RAHMEN FÜR EINEN RADMOTOR
MAGNET-BEARING ROTOR WITH A ONE-PIECE FRAME FOR A WHEEL MOTOR

(30) Priorité: 07.10.2015 FR 1559529
(43) Date de publication de la demande: 15.08.2018
(73) Titulaire: Lohr Industrie, 67980 Hangenbieten (FR)
(72) Inventeur: SCHEER, Daniel, 67190 Still (FR); DUMAS, Pierre, 67200 Strasbourg (FR); VERDIER, Laurent, 67114 Eschau (FR)
(74) Mandataire: Merckling, Norbert
(86) Numéro de dépôt international: PCT/FR2016/052541
(87) Numéro de publication internationale: WO 2017/060607

(56) Documents cités:
- EP-A1- 1 841 041
- EP-A2- 0 205 090
- EP-A2- 2 267 868
- WO-A2-2014/199039
- FR-A1- 3 002 378
- KR-B1- 100 901 712
- KR-B1- 100 901 712
- US-A1- 2001 033 118

## Description

### Domaine technique

La présente invention se rapporte au domaine technique général des machines synchrones tournantes à aimants permanents, machines par exemple de type moteur ou générateur, et plus particulièrement au domaine technique des moteurs-roues.

Une application préférentielle de l'invention porte plus spécifiquement sur un rotor extérieur de moteur de traction de type moteur-roue, par exemple un moteur de traction ferroviaire ou pour un véhicule routier de nature quelconque.

### Etat de la technique

Les machines synchrones tournantes à aimants permanents sont classiquement composées d'une pièce mobile, appelée rotor, comportant une série d'aimants permanents de polarité alternée et d'une pièce fixe, appelée stator, comprenant un ensemble de bobines d'induction.

Afin de générer un phénomène d'induction, qui permet la mise en mouvement du rotor dans le cas d'un moteur ou la création d'un courant dans le cas d'un générateur, ce rotor est une pièce cylindrique sur laquelle sont montées des rangées successives d'aimants permanents, parallèles entre elles et classiquement orientées selon la direction axiale du rotor, c'est-à-dire perpendiculairement au mouvement de rotation du rotor.

Ces aimants, destinés à se retrouver en vis-à-vis des bobinages du stator, sont de même polarité au sein d'une même rangée, mais sont généralement de polarité alternée d'une rangée sur l'autre. Il est également envisageable de réaliser des alternances de polarité avec par exemple des aimants de même polarité disposés sur deux ou trois rangées successives, puis des aimants de polarité opposée sur les deux ou trois rangées suivantes.

De façon classique, ce type de rotor comporte un châssis métallique de forme cylindrique, ouvert à chacune de ses extrémités, sur lequel les aimants sont fixés. Ce châssis cylindrique est ensuite refermé à l'une de ses extrémités par une pièce d'obturation que l'on vient rapporter sur le châssis, puis souder ou visser. Au niveau de sa partie centrale, cette pièce d'obturation est avantageusement réalisée sous la forme d'un moyeu, permettant le montage du rotor sur un axe, un essieu dans le cas d'un moteur-roue.

Ainsi, dans les moteurs-roues traditionnels, le châssis cylindrique du rotor et la partie formant moyeu sont deux pièces distinctes, rapportées et solidarisées l'une à l'autre par soudage ou par vissage. Cette structure en deux parties pose de nombreux problèmes.

En effet, lorsque l'on soude la pièce d'obturation sur le châssis cylindrique du rotor, l'opération de soudage induit une déformation de l'ensemble qui oblige à ré-usiner la pièce obtenue après son soudage, afin de garantir les caractéristiques géométriques nécessaires au bon fonctionnement du rotor (cylindricité). Cette déformation est encore plus importante si les aimants permanents sont déjà montés sur le rotor avant de réaliser le soudage.

Si l'on souhaite fixer la pièce d'obturation sur le châssis par vissage/boulonnage, il faut prévoir pour le châssis une paroi d'épaisseur importante, afin que la quantité de matière soit suffisante pour assurer une fixation solide par vissage. En raison d'une plus grande quantité de matière première utilisée, le prix de revient du rotor est plus important. En outre, cette épaisseur importante de paroi implique une réduction du diamètre de l'espace intérieur libre du rotor et donc de la surface sur laquelle les aimants permanents peuvent être disposés. La surface d'aimantation est ainsi plus restreinte, ce qui induit une moins bonne performance globale du moteur-roue.

Enfin, cette structure formée de deux pièces indépendantes, assemblées l'une à l'autre n'est pas complètement rigide et les usinages réalisés postérieurement à l'assemblage peuvent générer des déformations qui modifient la géométrie du rotor qui n'est plus parfaitement cylindrique, déformations qui sont problématiques pour le bon fonctionnement de la machine tournante.

Par ailleurs, dans les rotors traditionnels, les aimants sont classiquement fixés au châssis par collage. Cependant, en raison des efforts très importants subis par les aimants lors du fonctionnement du rotor et des hautes températures atteintes à l'intérieur de ces machines, les colles utilisées doivent être très performantes pour garantir un maintien satisfaisant, ce qui est difficile à obtenir. De plus en plus de dysfonctionnements sont recensés en raison de la tendance actuelle consistant à vouloir réaliser des machines synchrones de plus en plus puissantes tout en les logeant dans un espace de plus en plus réduit, augmentant ainsi l'échauffement interne. Cette volonté d'amélioration des performances est difficilement compatible avec une fixation par collage des aimants.

Afin de pallier les inconvénients du collage, plusieurs méthodes alternatives ont été proposées dans l'art antérieur pour la fixation des aimants.

On connait ainsi par exemple la demande de brevet EP 2.348.612 qui divulgue un rotor de machine synchrone dans lequel chacun des aimants permanents est collé sur une pièce-support intermédiaire engagée dans une rainure du châssis, et est ainsi retenu mécaniquement sur le châssis. Les aimants divulgués ont une superficie inférieure à celle des pièces-supports intermédiaires, de façon à laisser un espace libre entre les aimants adjacents formant un canal de circulation d'air entre chaque rangée d'aimants, en vue de limiter l'échauffement général du dispositif.

Si la création de ces canaux permet une meilleure circulation de l'air et ainsi une certaine limitation de l'échauffement, elle ne résout pas le problème du collage des aimants. En effet, les aimants restent collés sur les pièces-supports intermédiaires et la colle utilisée doit pouvoir supporter les contraintes sévères qu'elle subit en fonctionnement comme expliqué précédemment.

En outre, en raison de la présence de ces pièces-supports intermédiaires d'une part et de l'espace laissé libre pour les canaux de circulation d'air d'autre part, le volume disponible pour loger les aimants est notablement réduit. Tout ceci conduit à une forte diminution des performances du rotor du fait de la petite taille des aimants utilisés.

On connait également la demande de brevet FR 3.002.378, également publiée sous le numéro WO 2014/128410, qui divulgue un rotor sur lequel les aimants permanents sont retenus au moyen de réglettes de fixation qui sont engagées entre les rangées parallèles d'aimants et sont visées au châssis. Ces réglettes de fixation présentent une forme particulière à flancs bombés arrondis qui est responsable d'un prix de revient relativement élevé pour ces réglettes. En outre, les aimants permanents qui leur sont associés doivent présenter une forme arrondie concave complémentaire obtenue par un usinage spécifique assez délicat à réaliser qui augmente considérablement le coût de ces aimants.

De plus, même si les aimants sont retenus d'une façon mécanique par ces réglettes de fixation, ils doivent préalablement être pré-collés sur le châssis du rotor avant la mise en place des réglettes de fixation. Il ne s'agit donc pas d'une fixation entièrement mécanique.

Par ailleurs, le rotor décrit dans ce document est classique. Il comporte un châssis cylindrique traversant ouvert à ces deux extrémités, qu'il faut refermer par la suite d'un côté à l'aide d'une pièce d'obturation rapportée.

On connait encore les dispositifs divulgués dans les demandes de brevet WO 2014/199039 et EP 2.267.868 qui décrivent un rotor dans lequel les rangées d'aimants permanents sont maintenues mécaniquement au moyen de nervures réalisées dans l'épaisseur du châssis. Si le maintien est cette fois entièrement mécanique, il nécessite un usinage complexe et couteux du châssis cylindrique du rotor afin d'y creuser les rainures de réception des rangées d'aimants permanents et d'y conformer les nervures en surface. Cette étape d'usinage est si onéreuse qu'elle s'oppose en pratique à la fabrication et à la commercialisation de ces solutions à un coût économiquement acceptable.

En outre, afin de pouvoir introduire et actionner les outils nécessaires pour réaliser cet usinage, le châssis du rotor doit être obligatoirement prévu traversant, c'est-à-dire ouvert sur les deux côtés de sa partie cylindrique. On est donc obligé de rapporter par la suite, à l'une de ses extrémités, une pièce d'obturation distincte du châssis et réalisée indépendamment de celui-ci, que l'on fixe sur le châssis par vissage ou soudage avec les inconvénients précités.

Les autres documents antérieurs évoqués ne font eux aussi référence qu'à des rotors dont le châssis cylindrique est ouvert et traversant à chacune de ses extrémités.

### Exposé de l'invention

Le but de l'invention est de fournir un rotor pour machine synchrone tournante qui ne présente pas les inconvénients précités et dans lequel le châssis cylindrique servant de support aux aimants est réalisé d'une seule pièce et d'un seul tenant avec la pièce d'obturation formant moyeu qui ferme l'un de ses côtés.

La structure monobloc du châssis est particulièrement avantageuse car elle confère à l'ensemble une rigidité améliorée qui garantit une bien meilleure stabilité des caractéristiques géométriques du rotor en cas d'usinage ultérieur et en utilisation.

Un autre but de l'invention est de fournir un rotor dans lequel les aimants permanents sont fixés sur la partie cylindrique du châssis par une fixation directe, c'est-à-dire sans pièce intermédiaire ni support de montage, et entièrement mécanique, c'est-à-dire sans qu'aucun collage ou pré-collage ne soit nécessaire.

Le collage des aimants étant remplacé par une fixation entièrement mécanique, un maintien parfait de ces aimants est ainsi garanti quelle que soit la température interne du rotor en fonctionnement.

En outre, les moyens utilisés pour cette fixation sont parfaitement compatibles avec la réalisation d'un rotor à châssis monobloc comportant d'une pièce une partie cylindrique et une partie d'obturation formant moyeu.

Enfin, en raison de l'extrême simplicité des moyens utilisés et de leur forme, la solution enseignée par l'invention est très économique, en particulier en comparaison des systèmes antérieurs décrits.

Dans la présente demande, il conviendra de comprendre le terme « aimants » au sens large, c'est-à-dire désignant d'une part des éléments réalisés avec des matériaux magnétiques classiques et d'autre part des éléments réalisés avec des matériaux magnétisables. Ces matériaux magnétisables sont par exemple réalisés avec des matériaux à base de ferrite ou des alliages du genre SmCo, AlNiCo ou NdFeB.

Pour résoudre ces problèmes techniques, l'invention fournit un rotor porte-aimants pour machine synchrone tournante à aimants permanents. Il s'agit d'un rotor en forme générale de cylindre délimitant un espace intérieur de réception dans lequel un stator fixe comprenant un ensemble de bobines d'induction est destiné à être placé. Ce rotor comprend un châssis métallique, une série d'aimants permanents disposés en rangées parallèles orientées selon la direction axiale du cylindre, et un ensemble de réglettes de fixation placées chacune longitudinalement entre deux rangées successives d'aimants permanents et fixées mécaniquement au châssis.

Selon l'invention, le châssis métallique est une structure monobloc comprenant deux parties réalisées d'une seule pièce, à savoir : une partie cylindrique dont la paroi sert de support aux aimants permanents et aux réglettes de fixation, et une partie d'obturation formant moyeu qui ferme l'un des côtés de la partie cylindrique.

Ces réglettes de fixation réalisent une fixation mécanique, directe des aimants permanents sur la face interne de la paroi de la partie cylindrique du châssis. Elles comportent chacune une base qui repose sur la face interne de la paroi de la partie cylindrique du châssis, et deux flancs inclinés sortants qui prolongent ladite base en évasement.

Lesdits aimants permanents comportent au niveau de chacun de leurs champs latéraux un pan incliné rentrant de forme complémentaire à celle du flanc incliné sortant correspondant de la réglette de fixation adjacente, ce pan incliné rentrant étant engagé avec ledit flanc incliné sortant correspondant de la réglette de fixation adjacente, de façon que lesdites réglettes de fixation assurent le blocage vertical et latéral de ces aimants permanents.

Selon l'invention, les flancs inclinés sortants des réglettes de fixation sont prolongés par des flancs inclinés rentrants.

Selon l'invention, les réglettes de fixation présentent une section de forme hexagonale

Selon un mode de réalisation de l'invention, les réglettes de fixation sont amagnétiques ou de hauteur inférieure à la moitié de celle des aimants permanents.

Selon l'invention, les aimants permanents comportent un pan incliné sortant, qui succède à leurs pans inclinés rentrants.

Selon un mode de réalisation selon l'invention, le rotor comporte des butées mécaniques qui assurent le blocage longitudinal des rangées d'aimants permanents.

Selon une variante préférentielle de ce mode de réalisation, les butées mécaniques sont des rebords, des épaulements, ou des parois du châssis ou encore des pièces de butée amovibles.

Selon un autre mode de réalisation de l'invention, le rotor peut comporter en outre une couche de résine anticorrosion.

Avantageusement, le rotor selon l'invention peut être un rotor de moteur de traction.

L'invention enseigne également un moteur-roue qui comprend un rotor conforme à l'invention présentée ci-dessus.

L'invention propose également un procédé de fixation d'aimants permanents sur un rotor conforme à l'invention.

Ce procédé comporte les étapes suivantes :
- disposer les réglettes de fixation sur la face interne de la paroi de la partie cylindrique du châssis, parallèlement entre elles et selon la direction axiale du cylindre, en les espaçant d'une distance correspondant à la largueur d'une rangée d'aimants permanents, et pré-monter par fixation mécanique ces réglettes de fixation sur le châssis en laissant du jeu entre les réglettes de fixation et le châssis ;
- engager des éléments magnétisables ou des aimants permanents entre lesdites réglettes de fixation et les faire coulisser longitudinalement en profitant du jeu existant entre les réglettes de fixation et le châssis, jusqu'à former des rangées parallèles d'éléments magnétisables ou d'aimants permanents ;
- terminer la fixation mécanique des réglettes de fixation sur le châssis pour supprimer le jeu existant entre les réglettes de fixation et le châssis, et ainsi bloquer verticalement et latéralement les éléments magnétisables ou les aimants permanents par engagement de leurs pans inclinés rentrants avec les flancs inclinés sortants des réglettes de fixation adjacentes ; et
- dans le cas où l'on utilise des éléments magnétisables, magnétiser ces éléments magnétisables de manière qu'ils constituent des aimants permanents.

### Brève description des figures

D'autres caractéristiques et avantages de l'invention apparaitront à la lecture de la description détaillée qui va suivre, description faite en référence aux dessins annexés, dans lesquels :
- la figure 1 est une vue avant en perspective d'un exemple de rotor selon l'invention ;
- la figure 2 est une vue arrière en perspective du rotor de la figure 1 ;
- la figure 3 est une vue en perspective éclatée des différents éléments constitutifs du rotor de la figure 1 représentés à l'état dissocié ;
- la figure 4 est une vue en coupe longitudinale du rotor de la figure 1 ;
- la figure 5 est une vue en coupe transversale d'une portion du rotor de la figure 1 ;
- la figure 6 est un agrandissement du détail encerclé sur la figure 5 ;
- les figures 7 et 8 sont des vues, respectivement en perspective et en coupe transversale, d'un exemple de réglette de fixation selon l'invention représentée seule ;
- les figures 9 et 10 sont des vues, respectivement en perspective et en coupe transversale, d'un exemple d'aimant selon l'invention représenté seul.

### Exposé détaillé de l'invention

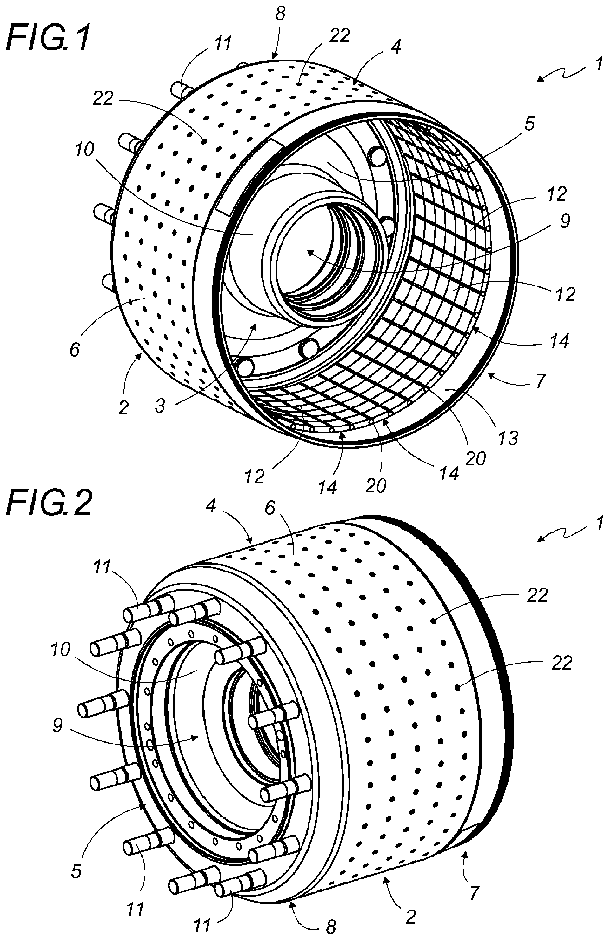

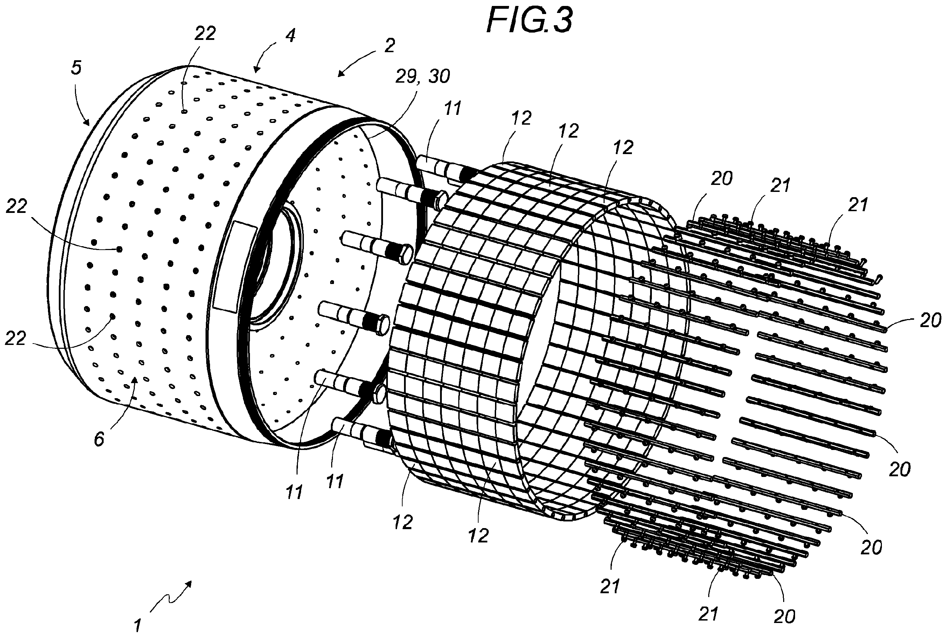

La présente invention va maintenant être décrite de façon détaillée en référence aux figures 1 à 10. Les éléments équivalents représentés sur les différentes figures porteront les mêmes références numériques.

Sur ces figures, on a représenté un exemple préférentiel de réalisation d'un rotor 1 selon l'invention. Bien entendu, il ne s'agit que d'un exemple particulier de réalisation, l'homme du métier pouvant imaginer et réaliser sans difficulté de nombreuses variantes ou modifications de ce rotor sans sortir du cadre de l'invention défini par les revendications annexées.

Le rotor 1 représenté est un rotor dit « extérieur » qui comprend un châssis 2, préférentiellement métallique, de forme générale cylindrique qui délimite dans son volume intérieur creux un espace de réception 3 prévu pour accueillir un stator à bobines d'induction (non représenté).

Le châssis 2 est une structure monobloc qui est réalisée d'une seule pièce et d'un seul tenant, en fonderie par exemple. Cette structure monobloc comporte deux parties d'un seul tenant, à savoir une partie cylindrique 4 et une partie d'obturation 5.

La partie cylindrique 4 comprend une paroi 6 cylindrique bordant l'espace de réception 3, et est ouverte à l'une de ses extrémités 7 permettant ainsi un accès total à l'espace de réception 3 pour le montage du stator.

La partie cylindrique 4 est fermée à son autre extrémité 8 par la partie d'obturation 5 qui prolonge d'une pièce la paroi 6 cylindrique.

Dans sa partie centrale, la partie d'obturation 5 présente une ouverture 9 préférentiellement bordée par un retour de paroi 10, sensiblement cylindrique et s'étendant vers l'intérieur de la partie cylindrique 4 du châssis 2 de façon concentrique.

Ce retour de paroi 10, qui présente un diamètre largement inférieur à celui de la paroi 6 de la partie cylindrique 4 du châssis 2, est avantageusement réalisé sous la forme d'un moyeu et permet ainsi le montage du rotor 1 sur un axe, par exemple un essieu dans le cas préférentiel représenté d'un moteur-roue.

Sur l'exemple représenté figure également un ensemble de boulons 11, qui sont disposés en cercle à la périphérie de la partie d'obturation 5 du châssis 2 et la traversent pour permettre la fixation sur le rotor 1 de la jante et du pneu appartenant au moteur roue.

Pour réaliser le phénomène d'induction recherché, le rotor 1 comporte en outre une pluralité d'aimants permanents 12, qui sont montés sur la partie cylindrique 4 du châssis 2 et fixés mécaniquement à celle-ci au niveau de la face interne 13 de la paroi 6, de manière à se retrouver, en position d'utilisation, à proximité et en vis-à-vis des bobines d'induction du stator placé dans l'espace de réception 3.

Ces aimants permanents 12 sont disposés en rangées 14, parallèles entre elles et orientées selon la direction axiale du cylindre (direction perpendiculaire au mouvement de rotation du rotor 1).

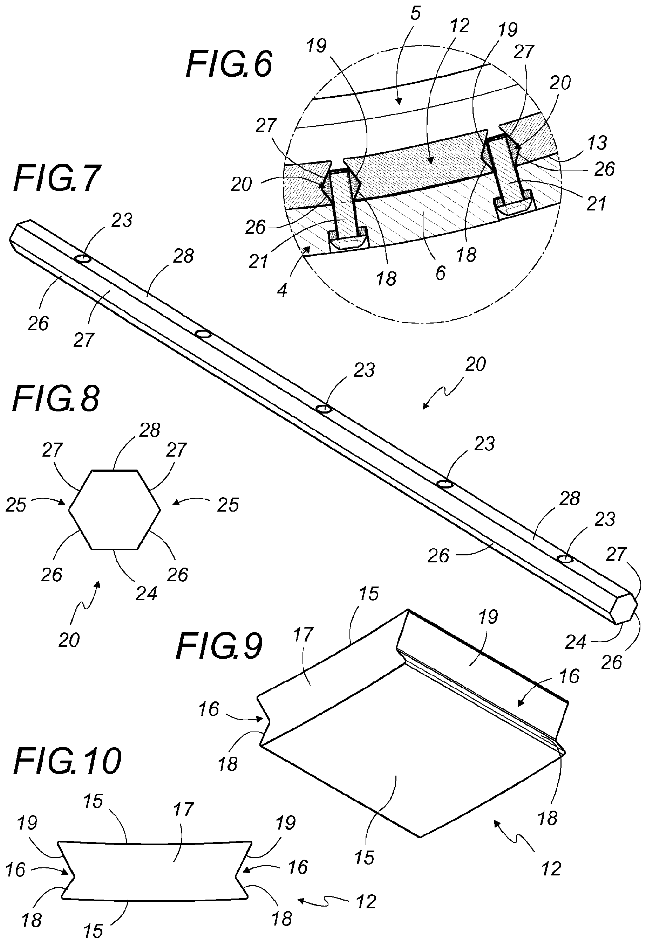

Les aimants 12 sont préférentiellement plats et de forme générale parallélépipédique avec une faible hauteur et des bases 15 sensiblement rectangulaires ou carrées constituant les pôles magnétiques de ces aimants 12. Un exemple préférentiel d'aimant 12 a été représenté seul sur les figures 9 et 10.

Ces aimants 12 comportent deux chants latéraux 16, qui, lorsque les aimants sont montés sur le rotor 1, sont orientés comme les rangées 14 selon la direction axiale du cylindre, et deux chants frontaux 17 qui sont placés transversalement aux rangées 14 selon une direction tangentielle au mouvement du rotor.

Selon l'invention, les aimants permanents 12 comportent au niveau de leurs chants latéraux 16 un pan incliné rentrant 18, c'est-à-dire que l'épaisseur de l'aimant diminue progressivement en allant de la base 15 destinée à être en appui contre la paroi 6 du châssis 2 vers le haut du pan incliné rentrant 18.

Bien qu'il soit possible que ce pan incliné rentrant 18 se poursuive sur toute la hauteur du chant latéral 16 de l'aimant 12, il est préférentiellement limité à une hauteur inférieure à la moitié de la hauteur globale du chant latéral 16 de l'aimant 12, afin d'augmenter la quantité d'aimant présente et ainsi la surface totale d'aimantation.

Pour les mêmes raisons, ce pan incliné rentrant 18 est préférentiellement prolongé par un pan vertical ou une face bombée sortante ou préférentiellement un pan incliné sortant 19, conférant au chant latéral 16 une forme générale concave.

Tous les aimants permanents 12 d'une même rangée 14 sont de même polarité, c'est-à-dire qu'ils sont disposés de manière à tous présenter la base 15 de même pôle (Nord ou Sud) du même côté. Ils ont ainsi par exemple tous leur base de polarité Nord dirigée vers la paroi 6 du châssis 2 et leur base de polarité Sud tournée vers le stator formant ainsi une rangée dite « rangée Sud », ou inversement pour former une rangée dite « rangée Nord ».

Ces rangées 14 sont réparties en groupes adjacents successifs comprenant chacun une ou plusieurs rangées 14 d'aimants 12 et dans chacun desquels tous les aimants 12 sont de même polarité. Leur polarité est par contre inversée alternativement d'un groupe à l'autre, les groupes Sud et les groupes Nord se succédant alternativement sur sensiblement toute la surface de la paroi 6 du châssis 2.

Du fait de cette disposition, les aimants 12 ont tendance à se repousser mutuellement au sein d'une même rangée 14 et d'un même groupe, mais à s'attirer d'un groupe à l'autre.

Les aimants permanents 12 peuvent également être constitués d'éléments en matériau magnétisable, qui sont assemblés sur le châssis 2 à l'état non magnétisés, puis magnétisés par la suite pour devenir des aimants permanents 12 tels que décrits ci-dessus. L'assemblage est ainsi facilité dans la mesure où la magnétisation desdits éléments n'intervient qu'après leur montage sur le châssis 2.

Selon l'invention, ces aimants permanents 12 sont fixés directement et d'une façon entièrement mécanique sur la face interne 13 de la paroi 6 au moyen d'un ensemble de réglettes de fixation 20 qui s'étendent selon la direction axiale du rotor cylindrique 1 et sont intercalées entre chaque rangée 14 d'aimants permanents 12. Chaque rangée 14 d'aimants permanents 12 est ainsi avantageusement bordée par deux réglettes de fixation 20, placées une de chaque côté de la rangée 14 et dont la longueur correspond sensiblement à celle de la rangée 14 d'aimants 12.

Ces réglettes de fixation 20 sont préférentiellement réalisées en un matériau amagnétique, par exemple en acier inoxydable amagnétique, de manière à ne pas interférer avec le champ magnétique créé par les aimants 12 adjacents.

Dans le cas où elles ne sont pas réalisées en un matériau amagnétique, leur hauteur est préférentiellement inférieure à la moitié de celle des aimants permanents 12 avec lesquels elles sont engagées. De cette façon, ces réglettes de fixation 20 n'atteignent pas le plan central qui sépare les deux pôles des aimants 12, permettant ainsi d'éviter les courts-circuits magnétiques entre les aimants qui ne participeraient pas à la génération du couple électromagnétique recherché.

Les réglettes de fixation 20 sont fixées mécaniquement à la partie cylindrique 4 du châssis 2, préférentiellement au moyen d'un ensemble de vis 21 qui traversent la paroi cylindrique 6 du châssis au niveau d'une multitude de perforations 22, avant de s'engager dans des alésages filetés 23 des réglettes de fixation 20 avec lesquels elles sont en prise.

Ces réglettes de fixation 20 comportent chacune une base 24 destinée à reposer contre la face interne 13 de la paroi 6 de la partie cylindrique 4 du châssis 2, prolongée en évasement au niveau de ses chants latéraux 25 par deux flancs inclinés sortants 26.

On comprendra l'expression « en évasement » utilisée ci-dessus comme signifiant que la réglette s'élargit progressivement en allant de sa base 24 située au niveau du châssis 2, vers la partie supérieure des flancs inclinés sortants 26.

Différentes formes peuvent indifféremment être adoptées pour la partie supérieure des réglettes de fixation 20 en fonction de la forme retenue pour les aimants permanents 12.

Les réglettes peuvent ainsi présenter par exemple une forme de section trapézoïdale, les flancs inclinés sortants 26 étant directement réunis par une face supérieure sensiblement plane.

Les flancs inclinés sortants 26 peuvent également être prolongés, par exemple, par des flancs verticaux, arrondis ou inclinés rentrants 27, avant d'être réunis par une face supérieure 28 préférentiellement plane.

Une réglette de fixation 20 à section de forme hexagonale peut ainsi être obtenue selon un exemple préférentiel de réalisation de l'invention. Une telle réglette de fixation 20 a été représentée seule sur les figures 7 et 8.

L'avantage de la réglette représentée, outre ceux déjà exposés, est que des barres à section hexagonale, de matériau et dimensions appropriées, existent commercialement à des prix peu onéreux. Pour réaliser les réglettes de fixation 20, il suffit donc de couper ces barres à longueur et d'y usiner les alésages filetés 23. Contrairement aux réglettes de fixation décrites dans l'art antérieur évoqué en introduction, les réglettes selon l'invention sont particulièrement économiques.

Quelle que soit la forme retenue pour leur section, les flancs inclinés sortants 26 des réglettes de fixation 20 présentent une forme complémentaire aux pans inclinés rentrants 18 des aimants permanents 12. Ainsi, lorsque les aimants permanents 12 sont placés entre deux réglettes de fixation 20, les pans inclinés rentrants 18 des aimants 12 se retrouvent engagés avec les flancs inclinés sortants 26 des réglettes 20, ce qui a pour effet de s'opposer aux déplacements latéraux et verticaux des aimants 12.

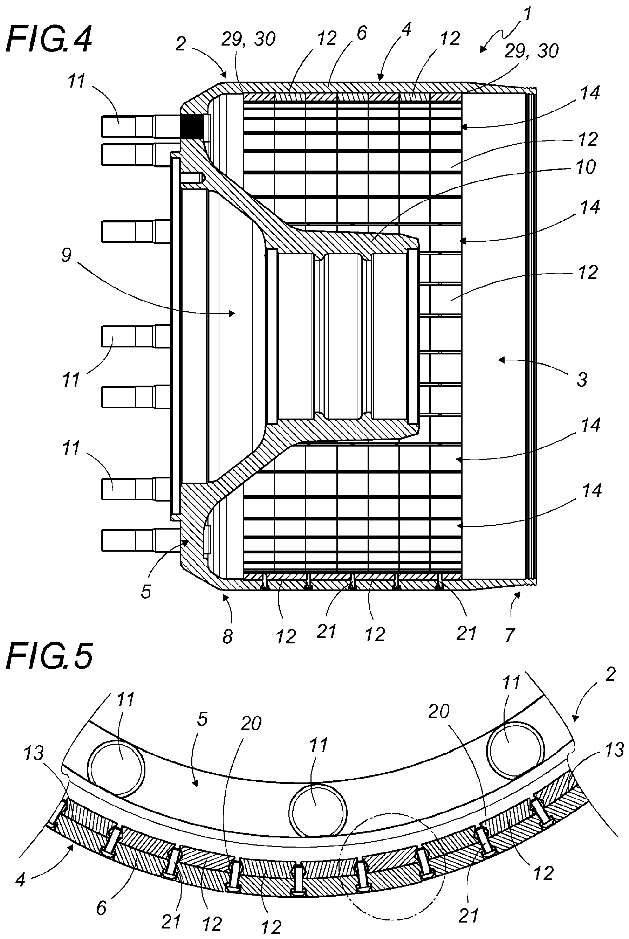

Comme on peut le voir plus particulièrement sur les figures 5 et 6, les réglettes de fixation 20 assurent par leur forme géométrique spécifique le blocage vertical (ou radial) et le blocage latéral (c'est-à-dire selon une direction tangentielle au mouvement circulaire du rotor) des aimants permanents 12.

Le blocage longitudinal des aimants permanents 12, c'est-à-dire dans la direction axiale du cylindre, est, lui, assuré par des butées mécaniques 29 qui empêchent le déplacement des aimants permanents 12 selon une direction parallèle aux rangées 14 d'aimants.

Sur l'exemple de réalisation représenté, ces butées mécaniques 29 sont constituées de chaque côté par un rebord 30 ou un épaulement du châssis 2 contre lesquels les aimants permanents 12 viennent buter lorsqu'ils sont montés sur la paroi cylindrique 6 et qui mettent en pression les aimants permanents 12 qui, comme ils sont de même polarité au sein de chaque rangée 14, ont tendance à se repousser.

Selon d'autres variantes envisageables, ces rebords 30 pourraient être remplacés d'un côté ou des deux par une paroi du châssis ou encore par des pièces de butée amovibles.

Par ailleurs, avant ou après la mise en place des aimants permanents 12 sur le châssis 2, le rotor 1 peut avantageusement être imprégné d'une résine (non représentée) qui protège les pièces métalliques qu'elle recouvre contre la corrosion.

En plus de réaliser une fixation directe et entièrement mécanique des aimants permanents 12 permettant de se passer complètement de tout collage problématique, les réglettes de fixation 20 selon l'invention présentent encore un avantage supplémentaire par rapport aux dispositifs antérieurs.

En effet, comme elles sont en contact par leur base 24 avec la paroi 6 du châssis, qu'elles s'étendent entre les rangées 14 d'aimants 12 et débouchent par leur face supérieure 28 dans l'espace de réception 3, elles constituent une multitude de ponts de conduction thermique qui mettent en communication l'intérieur de l'espace de réception 3 avec l'extérieur du châssis 2. Les réglettes de fixation 20 permettent ainsi une meilleure évacuation vers l'extérieur de la chaleur générée à l'intérieur du rotor 1, ce qui abaisse la température interne de fonctionnement. Elles participent ainsi à l'amélioration des performances globales du rotor en diminuant son échauffement fonctionnel.

L'invention concerne également un procédé de fixation d'aimants permanents 12 sur un rotor 1 tel que décrit ci-dessus.

Ce procédé est mis en œuvre à l'aide des étapes suivantes :
On dispose les réglettes de fixation 20 sur la face interne 13 de la paroi 6 de la partie cylindrique 4 du châssis 2. Pour cela, On les place parallèlement entre elles et selon la direction axiale du cylindre, en les espaçant d'une distance correspondant à la largueur d'une rangée 14 d'aimants permanents 12 ou d'éléments magnétisables à monter.

On pré-monte ces réglettes de fixation 20 par fixation mécanique sur le châssis 2 en laissant du jeu entre les réglettes de fixation 20 et le châssis 2. Pour cela, par exemple, on engage les vis 21 à travers les perforations 22 de la paroi 6 et dans les alésages filetés 23 des réglettes de fixation 20, mais sans les serrer complètement.

On engage des éléments magnétisables 12 ou des aimants permanents entre les réglettes de fixation 20 en soulevant légèrement les réglettes de fixation 20 grâce au jeu existant entre les réglettes de fixation 20 et le châssis 2, et on les fait coulisser longitudinalement jusqu'à ce qu'ils se retrouvent en butée contre les rebords 30.

Les aimants permanents 12, ou éléments magnétisables, forment alors des rangées 14 parallèles d'aimants permanents 12 ou d'éléments magnétisables, situées entre les réglettes de fixation 20.

On termine la fixation mécanique des réglettes de fixation 20 sur le châssis 2, par exemple en finissant de serrer les vis 21, pour supprimer le jeu existant entre les réglettes de fixation 20 et le châssis 2. Ceci provoque la mise en contact et l'engagement des pans inclinés rentrants 18 des aimants permanents 12, ou éléments magnétisables, avec les flancs inclinés sortants 26 des réglettes de fixation adjacentes et conduit à bloquer verticalement et latéralement les aimants permanents 12 ou éléments magnétisables.

Dans le cas d'éléments magnétisables, on réalise une étape supplémentaire consistant à magnétiser ces éléments magnétisables de manière qu'ils constituent des aimants permanents 12 de même polarité au sein de chacune des rangées 14.

De manière évidente, l'invention ne se limite pas au mode de réalisation préférentiel décrit précédemment et représenté sur les différentes figures, l'homme du métier pouvant y apporter de nombreuses modifications et imaginer d'autres variantes sans sortir ni de la portée, ni du cadre de l'invention définis par les revendications.

## Revendications

1. Rotor (1) porte-aimants pour machine synchrone tournante à aimants permanents, en forme générale de cylindre, délimitant un espace intérieur de réception (3) dans lequel un stator fixe comprenant un ensemble de bobines d'induction est destiné à être placé, rotor (1) comprenant un châssis (2) métallique, une série d'aimants permanents (12) disposés en rangées (14) parallèles orientées selon la direction axiale du cylindre, et un ensemble de réglettes de fixation (20) placées chacune longitudinalement entre deux rangées (14) successives d'aimants permanents (12) et fixées mécaniquement au châssis (2), où :
le châssis (2) métallique du rotor est une structure monobloc comprenant deux parties réalisées d'une seule pièce : une partie cylindrique (4) dont la paroi (6) sert de support aux aimants permanents (12) et aux réglettes de fixation (20), et une partie d'obturation (5) formant moyeu qui ferme l'un des côtés axiaux (8) de la partie cylindrique (4) ;
où lesdites réglettes de fixation (20) réalisent une fixation mécanique, directe des aimants permanents (12) sur la face interne (13) de la paroi (6) de la partie cylindrique (4) du châssis (2), et présentent une section de forme hexagonale, les réglettes de fixation comportant chacune une base (24) qui repose sur la face interne (13) de la paroi (6) de la partie cylindrique (4) du châssis (2) et deux flancs inclinés sortants (26) qui prolongent ladite base (24) en évasement, les flancs inclinés sortants (26) des réglettes de fixation (20) étant prolongés par des flancs inclinés rentrants (27) ; et
où lesdits aimants permanents (12) comportent au niveau de chacun de leurs champs latéraux (16) un pan incliné rentrant (18) de forme complémentaire à celle du flanc incliné sortant (26) correspondant de la réglette de fixation (20) adjacente et un pan incliné sortant (19) qui succède à leurs pans inclinés rentrants (18), ce pan incliné rentrant (18) étant engagé avec ledit flanc incliné sortant (26) correspondant de la réglette de fixation (20) adjacente de façon que lesdites réglettes de fixation (20) assurent le blocage vertical et latéral de ces aimants permanents (12).

2. Rotor (1) selon la revendication 1 **caractérisé en ce que** les réglettes de fixation (20) sont amagnétiques ou de hauteur inférieure à la moitié de celle des aimants permanents (12).

3. Rotor (1) selon l'une quelconque des revendications précédentes **caractérisé en ce qu'**il comporte des butées mécaniques (29) qui assurent le blocage longitudinal des rangées (14) d'aimants permanents (12).

4. Rotor (1) selon la revendication 3 **caractérisé en ce que** lesdites butées mécaniques (29) sont des rebords (30), des épaulements ou des parois du châssis (2), ou encore des pièces de butée amovibles.

5. Rotor (1) selon l'une quelconque des revendications précédentes **caractérisé en ce qu'**il comporte en outre une couche de résine anticorrosion.

6. Rotor (1) selon l'une quelconque des revendications précédentes **caractérisé en ce qu'**il s'agit d'un rotor de moteur de traction.

7. Moteur-roue **caractérisé en ce qu'**il comprend un rotor (1) selon l'une quelconque des revendications 1 à 6.

8. Procédé de fixation d'aimants permanents (12) sur un rotor (1) selon l'une quelconque des revendications 1 à 6 **caractérisé en ce qu'**il comporte les étapes suivantes :
- disposer les réglettes de fixation (20) sur la face interne (13) de la paroi (6) de la partie cylindrique (4) du châssis (2), parallèlement entre elles et selon la direction axiale du cylindre, en les espaçant d'une distance correspondant à la largueur d'une rangée (14) d'aimants permanents (12), et pré-monter par fixation mécanique ces réglettes de fixation (20) sur le châssis (2) en laissant du jeu entre les réglettes de fixation (20) et le châssis (2) ;
- engager des éléments magnétisables ou des aimants permanents (12) entre lesdites réglettes de fixation (20) et les faire coulisser longitudinalement en profitant du jeu existant entre les réglettes de fixation (20) et le châssis (2), jusqu'à former des rangées (14) parallèles d'éléments magnétisables ou d'aimants permanents (12) ;
- terminer la fixation mécanique des réglettes de fixation (20) sur le châssis (2) pour supprimer le jeu existant entre les réglettes de fixation (20) et le châssis (2), et ainsi bloquer verticalement et latéralement les éléments magnétisables ou les aimants permanents (12) par engagement de leurs pans inclinés rentrants (18) avec les flancs inclinés sortants (26) des réglettes de fixation (20) adjacentes ; et
- dans le cas où l'on utilise des éléments magnétisables, magnétiser ces éléments magnétisables de manière qu'ils constituent des aimants permanents (12).

## Patentansprüche

1. Magnethalter- Rotor (1) für Drehstrom- Synchronmaschine mit Permanentmagneten, mit einer allgemeinen Zylinderform, die einen inneren Aufnahmeraum (3) definiert, in den ein starrer Stator mit einem Bauteil aus Induktionsspulen eingesetzt werden soll, der Rotor (1) umfasst einen Metallrahmen (2), eine Reihe von Permanentmagneten (12), angeordnet in parallelen Reihen (14), ausgerichtet entlang der axialen Richtung des Zylinders und einen Bausatz Befestigungsleisten (20), die jeweils in Längsrichtung zwischen zwei aufeinanderfolgenden Reihen (14) Permanentmagneten (12) angeordnet und mechanisch am Rahmen (2) befestigt sind,
wobei es sich beim Metallrahmen (2) des Rotors um eine Monoblock-Struktur handelt, bestehend aus zwei Teilen, die in einem einzigen Teil hergestellt sind: ein zylinderförmiger Teil (4), dessen Wand (6) als Halter für die Permanentmagneten (12) und die Befestigungsleisten (20) dient und ein Verschlussteil (5), der eine Nabe bildet, die eine der axialen Seiten (8) des zylinderförmigen Teils (4) verschließt; wobei die erwähnten Befestigungsleisten (20) für eine mechanische, direkte Befestigung der Permanentmagneten (12) auf der Innenseite (13) der Wand (6) des zylinderförmigen Teils (4) des Rahmens (2) sorgen und einen Querschnitt in Form eines Sechsecks aufweisen, die Befestigungsleisten enthalten jeweils eine Basis (24), die auf der Innenseite (13) der Wand (6) des zylinderförmigen Teils (4) des Rahmens (2) ruht und zwei schräge, hinausführende Seitenflächen (26), die diese Basis (24) gewölbt verlängern, die schrägen, hinausführenden Seitenflächen (26) der Befestigungsleisten (20) werden durch schräge, hineinführende Seitenflächen (27) verlängert; und
wobei die erwähnten Permanentmagneten (12) in Höhe jedes ihrer Seitenfelder (16) eine hineinführende schräge Fläche (18) enthalten, deren Form komplementär zu der der entsprechenden hinausführenden Seitenfläche (26) der benachbarten Befestigungsleiste (20) ist und eine hinausführende schräge Fläche (19), die auf ihre hineinführenden schrägen Flächen (18) folgt, diese hineinführende schräge Fläche(18) rastet in die entsprechende hinausführende schräge Fläche (26) der benachbarten Befestigungsleiste (20) ein, so dass die erwähnten Befestigungsleisten (20) dafür sorgen, dass diese Permanentmagneten (12) vertikal und seitlich blockiert sind.

2. Rotor (1) nach Anspruch 1, **dadurch gekennzeichnet, dass** die Befestigungsleisten (20) nicht magnetisch sind oder weniger als halb so hoch sind, wie die Permanentmagneten (12).

3. Rotor (1) nach irgendeinem der vorangehenden Ansprüche, **dadurch gekennzeichnet, dass** er mechanische Anschläge (29) enthält, die dafür sorgen, dass die Reihen (14) Permanentmagneten (12) in Längsrichtung blockiert werden.

4. Rotor (1) nach Anspruch 3, **dadurch gekennzeichnet, dass** die erwähnten mechanischen Anschläge (29) Ränder (30), Schultern oder Wände des Rahmens (2) sind oder auch abnehmbare Anschlagteile.

5. Rotor (1) nach irgendeinem der vorangehenden Ansprüche, **dadurch gekennzeichnet, dass** er außerdem eine Schicht Rostschutzharz enthält.

6. Rotor (1) nach irgendeinem der vorangehenden Ansprüche, **dadurch gekennzeichnet, dass** es sich um den Rotor einer Zugmaschine handelt.

7. Radnabenmotor, **dadurch gekennzeichnet, dass** er einen Rotor (1) nach irgendeinem der Ansprüche 1 bis 6 enthält.

8. Verfahren zur Befestigung von Permanentmagneten (12) auf einem Rotor (1) nach irgendeinem der Ansprüche 1 bis 6 **dadurch gekennzeichnet, dass** es die folgenden Schritte umfasst:
- Befestigung der Befestigungsleisten (20) auf der Innenseite (13) der Wand (6) des zylinderförmigen Teils (4) des Rahmens (2), parallel zueinander und in der Axialrichtung des Zylinders, mit einem Abstand entsprechend der Breite einer Reihe (14) Permanentmagneten (12), und Vormontage durch mechanische Befestigung dieser Befestigungsleisten (20) am Rahmen (2), wobei ein Spiel zwischen den Befestigungsleisten (20) und dem Rahmen (2) vorgesehen werden muss;
- Einrasten der magnetisierbaren Elemente oder der Permanentmagneten (12) zwischen den erwähnten Befestigungsleisten (20) und Verschiebung in Längsrichtung, unter Nutzung des vorhandenen Spiels zwischen den Befestigungsleisten (20) und dem Rahmen (2), bis parallele Reihen (14) von magnetisierbaren Elementen oder Permanentmagneten (12) gebildet wurden,
- Abschluss der mechanischen Befestigung der Befestigungsleisten (20) am Rahmen (2) zur Beseitigung des vorhandenen Spiels zwischen den Befestigungsleisten (20) und dem Rahmen (2), und dadurch vertikale und seitliches Blockieren der magnetisierbaren Elemente oder der Permanentmagneten (12) durch Einrasten ihrer hineinführenden schrägen Flächen (18) in die entsprechenden hinausführenden schrägen Flächen (26) der benachbarten Befestigungsleisten (20); und
- für den Fall, dass magnetisierbare Elemente verwendet werden, Magnetisierung dieser magnetisierbaren Elemente so dass sie Permanentmagneten (12) bilden.

## Claims

1. Magnet bearing rotor (1) for a synchronous rotating machine with permanent magnets, in the general shape of a cylinder delimiting an inner receiving space (3) wherein a fixed stator comprising a set of induction coils is intended to be arranged, the rotor (1) comprising a metal frame (2), a series of permanent magnets (12) arranged in parallel rows (14) oriented in the axial direction of the cylinder, and a set of fastening strips (20) each placed longitudinally between two successive rows (14) of permanent magnets (12) and mechanically fastened to the frame (2),
wherein the metal frame (2) of the rotor is a one-piece structure comprising two parts manufactured as one piece: a cylindrical portion (4) wherein the wall (6) serves as a support for the permanent magnets (12) and the fastening strips (20), and a closure portion (5) forming a hub that closes one of the axial sides (8) of the cylindrical portion (4);
wherein said fastening strips (20) provide a direct mechanical attachment for the permanent magnets (12) on the inner surface (13) of the wall (6) of the cylindrical portion (4) of the frame (2) and have a cross-section of a hexagonal shape, the fastening strips each comprising a base (24) that rests on the inner surface (13) of the wall (6) of the cylindrical portion (4) of the frame (2), and two outwardly inclined sides (26) that extend said base (24) by flaring it, the outwardly inclined sides (26) of the fastening strips (20) being extended by inwardly inclined flanges (27); and
wherein said permanent magnets (12) comprise, at each of the lateral edges (16) thereof, an inwardly inclined surface (18) of a shape complementary to that of the corresponding outwardly inclined side (26) of the adjacent fastening strip (20) and an outwardly inclined surface (19) that succeeds the inwardly inclined surfaces (18) thereof, said inwardly inclined surface (18) being engaged with said corresponding outwardly inclined side (26) of the adjacent fastening strip (20), such that said fastening strips (20) provide vertical and lateral locking of said permanent magnets (12).

2. Rotor (1) according to claim 1 **characterized in that** the fastening strips (20) are non-magnetic or less than half the height of the permanent magnets (12).

3. Rotor (1) according to any of the preceding claims **characterized in that** it comprises mechanical stops (29) which ensure the longitudinal locking of the rows (14) of permanent magnets (12).

4. Rotor (1) according to claim 3 **characterized in that** said mechanical stops (29) are flanges (30), shoulders, or walls of the frame (2) or even removable abutment parts.

5. Rotor (1) according to any of the preceding claims **characterized in that** it further comprises a layer of anti-corrosion resin.

6. Rotor (1) according to any of the preceding claims **characterized in that** it is a rotor of a traction motor.

7. Wheel motor **characterized in that** it comprises a rotor (1) according to any one of claims 1 to 6.

8. Method for fastening permanent magnets (12) to a rotor (1) according to any one of claims 1 to 6, **characterized in that** it comprises the following steps:
- arranging the fastening strips (20) on the inner surface (13) of the wall (6) of the cylindrical portion (4) of the frame (2), parallel therebetween and according to the axial direction of the cylinder, spaced apart by a distance corresponding to the width of a row (14) of permanent magnets (12), and pre-assembling said fastening strips (20) by mechanical attachment onto the frame (2) leaving a clearance between the fastening strips (20) and the frame (2);
- engaging magnetizable elements or permanent magnets (12) between said fastening strips (20) and sliding them longitudinally, taking advantage of the clearance between the fastening strips (20) and the frame (2), in order to form parallel rows (14) of magnetizable elements or permanent magnets (12);
- completing the mechanical attachment of the fastening strips (20) to the frame (2) in order to remove the clearance between the fastening strips (20) and the frame (2), and thus vertically and laterally locking the magnetizable elements or permanent magnets (12) by engaging the inwardly inclined surfaces (18) thereof with the outwardly inclined sides (26) of the adjacent fastening strips (20); and
- in the case where magnetizable elements are used, magnetizing said magnetizable elements such that they constitute permanent magnets (12).
